# EUROPÄISCHE PATENTSCHRIFT

(11) **EP 0 349 716 B1**
(45) Veröffentlichungstag und Bekanntmachung des Hinweises auf die Patenterteilung: **10.02.1993**
(21) Anmeldenummer: 89106294.5
(22) Anmeldetag: 10.04.1989
(51) Int. Cl.: G01D 5/242, G01D 5/244

(54) **System zur Erfassung der Position von beweglichen Maschinenteilen**
System for the detection of the position of moving machine parts
Système de détection de la position de parties mobiles d'une machine

(30) Priorität: 06.05.1988 DE 3815534
(43) Veröffentlichungstag der Anmeldung: 10.01.1990
(73) Patentinhaber: Heidelberger Druckmaschinen Aktiengesellschaft, D-69019 Heidelberg (DE)
(72) Erfinder: Hauck, Dieter, D-6930 Eberbach (DE); May, Karl-Heinz, D-6806 Viernheim (DE); Müller, Hans, D-6902 Sandhausen (DE); Rehberger, Jürgen, D-6915 Dossenheim (DE)
(74) Vertreter: Stoltenberg, Heinz-Herbert Baldo

(56) Entgegenhaltungen:
- DE-C- 2 930 793
- DE-C- 3 219 894
- DE-C- 3 318 351

## Beschreibung

Die Erfindung betrifft ein System zur Erfassung der Position von beweglichen Maschinenteilen, insbesondere der Drehlage von rotierenden Teilen einer Druckmaschine, wobei ein Inkrementalgeber vorgesehen ist, welcher Tachoimpulse erzeugt, die gezählt werden.

Bei der Steuerung von Maschinen mittels Rechnern tritt häufig die Aufgabe auf, die Position von beweglichen Maschinenteilen zu erfassen und bei vorgegebenen Positionen bestimmte Vorgänge auszulösen. So kann beispielsweise eine Maschine bei Erreichen einer vorgegebenen Position angehalten werden. Ferner können während des Laufs der Maschine weitere Funktionen und Vorgänge synchron gesteuert werden. Dieses kann insbesondere bei einer Druckmaschine einen erheblichen Teil der zur Verfügung stehenden Rechnerkapazität beanspruchen. Dabei benötigt eine laufende Überwachung der Maschinenposition eine erhebliche Rechnerzeit - insbesondere dann, wenn bei einer schnell laufenden Maschine die jeweilige Position mit großer Genauigkeit bestimmt werden soll.

Die dazu verwendeten digital-inkremental arbeitenden Positionsgeber erzeugen je Längeneinheit oder Winkeleinheit hochfrequente Positionssignale, die um 90° zueinander phasenverschoben sind.

In der Veröffentlichung H.-J. Warnecke und W. Dutschke (Herausgeber): "Fertigungsmeßtechnik, Handbuch für Industrie und Wirtschaft", Springer Verlag, Berlin, 1984 ist auf Seite 316 eine Steuerung für ein Koordinatenmeßsystem beschrieben, bei der je Koordinate ein digitales Wegmeßsystem vorgesehen ist, welches wegproportionale Zählimpulse erzeugt, die einem Zähler bzw. Floatingzähler zuführbar sind. Von einem Rechner gesteuert, wird ein Tastsystem so lange in Richtung eines Werkstückes verfahren, bis der in dem Floatingzähler vorgegebene Zählerinhalt Null ist. Diese Lösung hat den Nachteil, daß bei hoher Verfahrgeschwindigkeit oder hoher Auflösung im Rechner eine hohe Datenrate zu verarbeiten ist, so daß der Rechner zu einem großen Teil seiner Operationszeit für die Lagesteuerung beansprucht wird und nicht für weitere parallel laufende rechnergestützte Operationen zur Verfügung steht. Wenn nicht ein aufwendiges Mehrrechnersystem installiert werden soll, sind der Verfahrgeschwindigkeit und der Auflösung Grenzen gesetzt, die in der maximal zu verarbeitenden Datenrate liegen. Desweiteren kann die Positioniergenauigkeit durch Störimpulse beeinträchtigt werden, die auf dem Übertragungsweg vom Wegmeßsystem zu den Zählern eingekoppelt werden, wenn keine besonderen Vorkehrungen zur Störimpulsunterdrückung vorgesehen sind.

In der in DE 29 30 793 C2 beschriebenen Schaltungsanordnung soll der Einfluß von Störsignalen beseitigt werden, die von weniger als der Hälfte der Teilung eines Rastermaßstabes einnehmenden Störbewegungen verursacht werden. Die Lösung, welche auch an einer Rotationsdruckmaschine verwendet werden kann, besteht aus einer Schaltungsanordnung, die zwei Exklusiv-ODER-Glieder und zwei Flip-Flops enthält und die zwischen einem Impulsgeber und einer Positionserfassungseinrichtung geschaltet ist. Die Schaltungsanordnung erzeugt nur eine Art von Zählsignalen, die einem Zähleingang eines Zählers zuführbar sind, der nur in eine Richtung zählt.

In der Patentschrift DE 32 19 894 C2 ist ein Inkremental-Digital-Umsetzer zum Umsetzen zweier phasenverschobener Lagesignale eines Impulsgebers beschrieben, die die Position eines Gegenstandes beinhalten. Bei diesem Umsetzer werden ebenfalls die Auswirkungen von mechanischen Erschütterungen oder Vibrationen auf die Impulsverarbeitung beseitigt, indem sogenannte "Falschwegimpulse" bei Feststellung einer Bewegung gegen die festgelegte Richtung unter Sperrung der Ausgabe der von einem Lagezähler zu zählenden Zählimpulse in einem eigens für die Fehlimpulse vorgesehenen reversiblen Zähler aufsummiert und nach dem Übergang der Störbewegung in die festgelegte Richtung die Ausgabe von Zählimpulsen an den Lagezähler erst freigegeben werden, wenn die Anzahl der aufgetretenen Zählimpulse die Summe der in der entgegengesetzten Richtung entfallenden Zählimpulse überschreitet.

Damit der Zählerstand des Lagezählers jederzeit genau der Lage des bewegten Gegenstandes entspricht und der Zähler für Fehlimpulse entbehrlich ist, ist zwischen dem Impulsgeber und dem eigentlichen Lagezähler ein Signalgenerator aus D-Flip-Flops, ODER-Gliedern und Verzögerungsgliedern geschaltet.

Diese Lösungen vermögen den Einfluß von Störsignalen zu beseitigen, welche durch mechanische Störeinflüsse hervorgerufen werden. Der Einfluß elektromagnetisch eingestrahlter Störimpulse wird gemäß diesen Lösungen nicht eliminiert. Desweiteren bleibt die Auflösung auf die Rasterkonstante des Rastermaßstabes begrenzt.

Aufgabe der Erfindung ist es, eine Schaltungsanordnung zur Verarbeitung von Signalen eines digital-inkremental arbeitenden Positionsgebers zu entwickeln, die in Bezug auf Signalverarbeitungsgeschwindigkeit, Zuverlässigkeit und Auflösung eine Verbesserung der Gebrauchseigenschaften ermöglicht.

Die erfindungsgemäße Schaltungsanordnung ist dadurch gekennzeichnet, daß zwischen einem digital-inkremental arbeitenden Positionsgeber, dessen Zählimpulse in einer Zählerschaltung verarbeitet werden, und dem Eingang der Zählerschaltung ein Schaltnetz vorgesehen ist. Dem Schaltnetz sind über zwei erste Eingänge zwei um 90° zueinander phasenverschobene Zählimpulssignale des Positionsgebers zuführbar. Über zwei weitere Eingänge sind dem Schaltnetz ein digitales Signal über die momentan vorhandene Drehrichtung des Maschinenteils und ein digitales Signal für das Über- oder Unterschreiten eines Schwellwertes für die Geschwindigkeit des Maschinenteils aus einem Rechner zuführbar, der zur Sollwertvorgabe mit einem Register und mit einen Ausgang eines Vergleiches für Zählersignale verbunden ist. Weitere zwei Eingänge des Schaltnetzes sind mit dem Ausgang für die niederwertigste Stelle und dem Ausgang für die zweitniederwertigste Stelle der Zählerschaltung verbunden. Die Ausgänge des Schaltnetzes stehen mit Zählersignaleingängen und Zählerfreigabesignaleingängen der Zählerschaltung in Verbindung.

Das Schaltnetz bewirkt, daß die Signale des Positionszählers so verknüpft werden, daß diese nur dann gezählt werden, wenn eine zulässige Kombination der Positionssignale vorliegt.

Vorteilhafte Ausführungsformen des Schaltnetzes ergeben sich dann, wenn des Schaltnetz aus einer Antivalenzschaltung und zwei Äquivalenzschaltungen mit je zwei Eingängen besteht, deren Verknüpfung einen geringen schaltungstechnischen Aufwand darstellt.

Die Filterwirkung des Schaltnetzes gegen Störimpulse kann noch dadurch verbessert werden, wenn in Schaltnetz noch eine weitere Antivalenzschaltung, eine zusätzliche UND-Schaltung und eine ODER-Schaltung mit je zwei Eingängen vorgesehen sind.

Gemäß einer anderen Weiterbildung ist vorgesehen, daß für Testzwecke der Rechner drei Testsignalausgänge aufweist, die mittels eines Umschalters anstelle der Ausgänge des Positionsgebers auf Schaltelemente zur Verarbeitung der Signale des Positionsgebers schaltbar sind. Auf diese Weise ist es möglich, die Schaltungsanordnung im Stillstand der Maschine zu testen.

Die Auflösung bei der Positionserfassung des Maschinenteils kann dadurch erhöht werden, daß ein in seiner Frequenz vom Rechner steuerbarer Zusatzimpulsgenerator vorgesehen ist, dessen Impulse anstelle der Zählimpulse des Positionsgebers gezählt werden. Die Frequenz der Impulse des Zusatzimpulsgenerators können einem vorgegebenen Vielfachen der Frequenz der Zählimpulse des Positionsgebers entsprechen, wobei die Impulse des Zusatzimpulsgenerators einer weiteren Zählerstufe der Zählerschaltung zugeführt werden können, deren Ausgangssignal die niederwertigen Stellen der Zählerschaltung bilden.
Die Frequenz der Impulse des Zusatzimpulsgenerators kann im Rechner in Abhängigkeit von der Geschwindigkeit des Maschinenteils berechnet werden. Zur Erfassung der Geschwindigkeit des Maschinenteils kann einer der Ausgänge des Positionsgebers mit dem Eingang eines in seinem Teilerverhältnis vom Rechner steuerbaren Frequenzteiler verbunden sein.

Eine weitere Erhöhung der Zuverlässigkeit kann dadurch erreicht werden, wenn dem Frequenzteiler ein zweipoliger elektronischer Umschalter vorgesetzt ist. Der Umschalter wird von einer Schaltung derart gesteuert, daß bei Ausfall eines der Signale am Ausgang des Positionsgebers das andere weitergeleitet wird.

Ausführungsbeispiele der Erfindung sind in der Zeichnung anhand mehrerer Figuren dargestellt und in der nachfolgenden Beschreibung näher erläutert. Es zeigt:
- Fig. 1: eine Anordnung zur Auswertung von Tachosignalen mit einem Ausführungsbeispiel des erfindungsgemäßen Systems,
- Fig. 2: eine bei dem Ausführungsbeispiel verwendete Zählerschaltung,
- Fig. 3: eine weitere Zählerschaltung,
- Fig. 4: ein Schaltnetz, das Teil der Schaltungen nach den Figuren 2 und 3 ist,
- Fig. 5: Zeitdiagramme einiger bei der Anordnung nach Fig. 2 verwendeter Signale.
- Fig. 6: einen Automatengraphen zur Erläuterung der Funktion des Schaltnetzes und
- Fig. 7: ein weiteres Schaltnetz.

Gleiche Teile sind in den Figuren mit gleichen Bezugszeichen versehen.

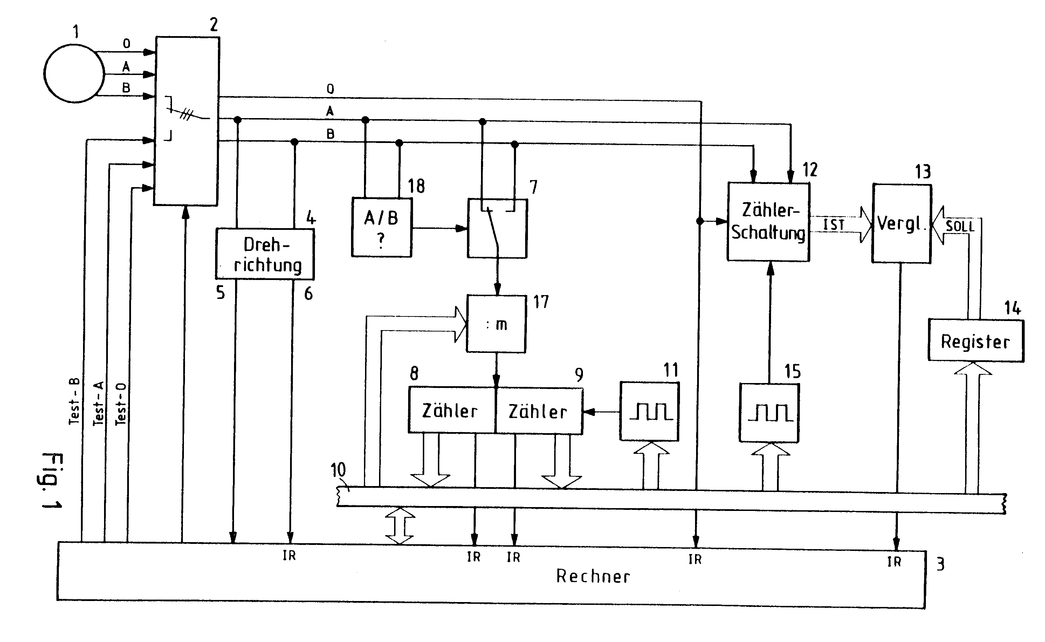

Bei der Anordnung nach Fig. 1 ist ein an sich bekannter Inkrementalgeber 1 vorgesehen. Derartige Inkrementalgeber bestehen beispielsweise aus einer mit optischen Markierungen versehenen Teilscheibe, die von opto-elektrischen Wandlern abgetastet wird. Dabei gibt einer der opto-elektrischen Wandler während einer Umdrehung einen Impuls 0 ab. Ferner werden Tachosignale A und B erzeugt, die mäanderförmig und zueinander um 90° phasenverschoben sind. Bei einem gebräuchlichen Inkrementalgeber umfassen die Tachosignale A und B jeweils 1024 Impulse pro Umdrehung.

Die Tachosignale 0, A und B werden Eingängen eines Umschalters 2 zugeführt, dessen weitere Eingänge mit elektronisch erzeugten Testsignalen Test-0, Test-A und Test-B beaufschlagt sind. Der Umschalter ist vom Rechner 3 steuerbar, so daß in einer Test-Betriebsart die im folgenden beschriebenen Schaltungen auch im Stillstand der Maschine getestet werden können.

Die Tachosignale A und B werden zur Erfassung der Drehrichtung und der Position sowie zur Messung der Geschwindigkeit bzw. Drehzahl ausgewertet. Zur Erfassung der Drehrichtung werden die Tachosignale A und B einer Schaltung 4 zugeführt. Die Schaltung 4 weist zwei Ausgänge 5, 6 auf, wobei am Ausgang 5 ein Signal zur Kennzeichnung der Drehrichtung ansteht und am Ausgang 6 ein Impuls bei Änderung der Drehrichtung abgegeben wird. Während das die Drehrichtung kennzeichnende Signal einem Dateneingang des Rechners zugeführt wird, erzeugt der Impuls am Ausgang 6 eine Programmunterbrechung (Interrupt, IR).

Die Messung der Drehzahl erfolgt mit zwei Zählern 8, 9, denen über einen Umschalter 7 und einen Frequenzteiler 17 eines der Tachosignale A bzw. B zugeführt wird. Dabei wird der Umschalter 7 von einer Schaltung 18 derart gesteuert, daß bei Ausfall eines der Tachosignale das andere weitergeleitet wird. Der Frequenzteiler 17 ist programmierbar, wozu das jeweilige Teilerverhältnis über den Datenbus 10 vom Rechner 3 zugeführt wird. Den Zählern 8, 9 wird ein Referenzsignal zugeführt, dessen Frequenz entsprechend der Auflösung der Drehzahlmessung wesentlich höher als die Frequenz der Tachosignale ist. Um auch bei hohen Drehzahlen eine hohe Auflösung der Drehzahlmessung zu erreichen, ohne daß bei niedrigen Drehzahlen die Zähler 8, 9 überlaufen, kann die Frequenz des Referenzsignals variiert werden. Dazu wird ein entsprechender Wert über das Bussystem 10 dem Oszillator 11 für das Referenzsignal zugeführt.

Die Messung der Drehzahl erfolgt nun derart, daß abwechselnd einer der Zähler zwischen zwei vom Frequenzteiler 17 abgegebenen Impulsen die Impulse des Referenzsignals zählt. Nach Beendigung des Zählvorganges wird eine Programmunterbrechung (IR) ausgelöst, worauf der Rechner den Zählerstand über den Datenbus 10 liest. Inzwischen wurde bereits der andere Zähler gestartet, so daß die Dauer einer jeden Periode der Ausgangssignale des Frequenzteilers 17 gemessen wird. Die Meßwerte werden im Rechner 3 in Drehzahlwerte umgerechnet.

Da zum Einlesen des Zählerstandes jeweils eine Programmunterbrechung ausgelöst wird, werden dadurch andere Programmabläufe im Rechner gestört. Um diese Störungen nicht zu häufig auftreten zu lassen, wird bei höheren Drehzahlen die Frequenz der Tachosignale A und B - wie bereits beschrieben - geteilt. Der Datenbus und der Rechner sind stark vereinfacht dargestellt, da geeignete Schaltungen und Bausteine hinreichend bekannt sind.

Zur Erfassung der Position werden die Tachosignale A und B und der Impuls 0 einer Zählerschaltung 12 zugeführt. Außerdem ist vorgesehen, daß der Impuls 0 eine Programmunterbrechung auslöst. Durch den Impuls 0 wird die Zählerschaltung rückgesetzt, so daß der Zählerstand die Position bzw. den Drehwinkel bezogen auf eine Anfangsstellung angibt. Dieser Wert wird bei der Anordnung nach Fig. 1 als Ist-Position einem Vergleicher 13 zugeführt und dort mit einer Soll-Position, welche vorher vom Rechner in ein Register 14 eingeschrieben wurde, verglichen. Ist die Maschine bei der Soll-Position angelangt, so sind beide Werte gleich und der Vergleicher 13 löst eine Programmunterbrechung aus, worauf der Rechner die bei der Soll-Position vorgesehenen Maßnahmen veranlaßt. Unmittelbar danach kann über das Register 14 eine neue Soll-Position eingegeben werden. Bis die Maschine diese neue Soll-Position erreicht, ist im Rechner keine laufende Erfassung der Position der Maschine erforderlich.

Zur Erhöhung der Auflösung bei der Positionsermittlung können der Zählerschaltung Zusatzimpulse von einem Zusatzimpulsgenerator 15 zugeführt werden, deren Frequenz einem Vielfachen der Frequenz der Tachosignale entspricht. Dazu wird der Oszillator 15 vom Rechner 3 aufgrund der Frequenzmessung mit Hilfe der Schaltungen 7 bis 11 gesteuert. Die Zählung der Zusatzimpulse ergibt die niederwertigen Stellen der dem Vergleicher 13 zugeführten Ist-Position. Bedingt durch die Trägkeit der Maschine, ändert sich die Frequenz der Tachosignale nicht allzu schnell, so daß die Frequenzmessung und damit die Steuerung des Oszillators 15 für die nachfolgenden Perioden des Tachosignals mit ausreichender Genauigkeit erfolgen.

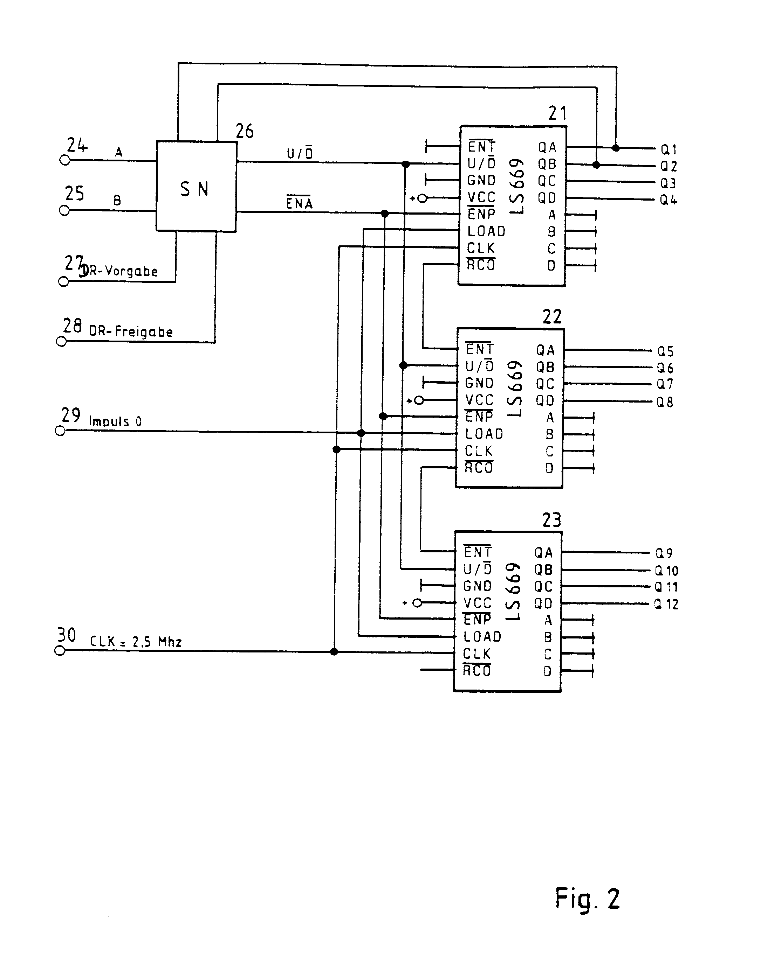

Fig. 2 zeigt ein Ausführungsbeispiel für die Zählerschaltung 12 (Fig. 1), bei welchem drei 4-Bit-Zähler vom Typ LS 669 vorgesehen sind. Übertragsausgänge der Zähler 21 und 22 sind mit Eingängen der Zähler 22 und 23 verbunden, so daß sich insgesamt ein 12-Bit-Zähler ergibt. Die Tachosignale A und B werden über Eingänge 24, 25 einem Schaltnetz 26 zugeführt, wo durch logische Verknüpfung mit den beiden niederwertigen Stellen Q1 und Q2 des Zählerstandes ein Aufwärts/Abwärtssignal U/D̅ und ein Zählerfreigabesignal E̅N̅A̅ abgeleitet werden. Außerdem werden dem Schaltnetz 26 über Eingänge 27, 28 die Signale DR-Vorgabe und DR-Freigabe zugeleitet. Das Signal DR-Vorgabe bezeichnet die Drehrichtung der Maschine. Das Signal DR-Freigabe besagt, ob die Drehzahl der Maschine über oder unterhalb einer Drehzahl ist, bei welcher eine Richtungsänderung erfolgen kann. Ein weiterer Eingang 29 ist für den Impuls 0 vorgesehen, der den LOAD-Eingang steuert und somit die Zähler rücksetzt, da die Dateneingänge A bis D auf Massepotential liegen. Schließlich weist die Zählerschaltung 12 einen Eingang 30 für ein Taktsignal CLK auf.

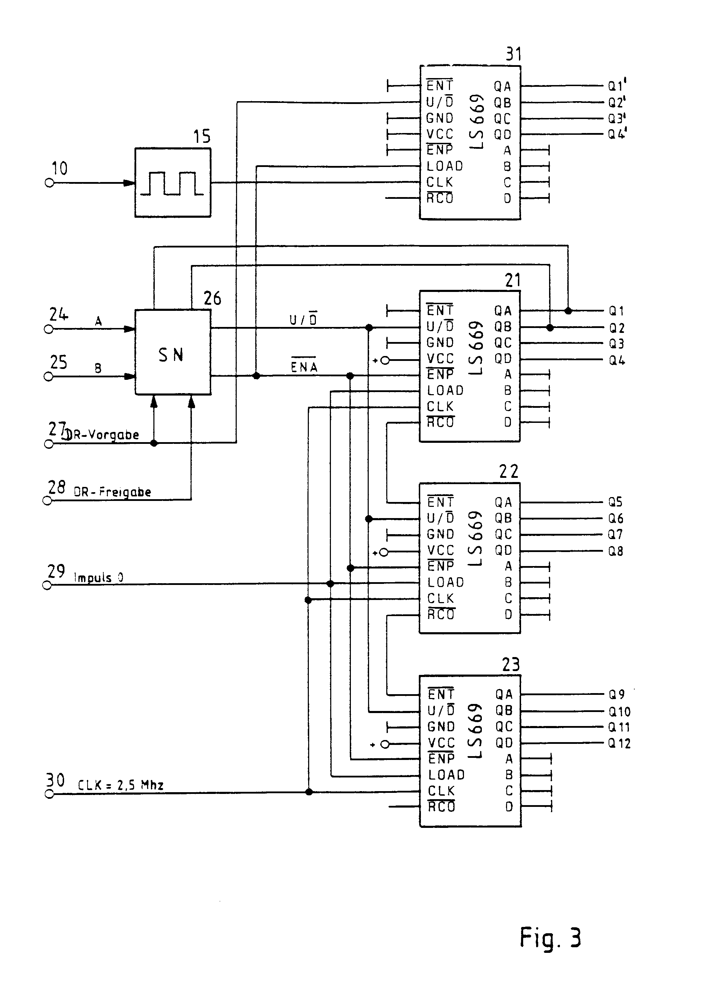

Wie bereits im Zusammenhang mit Fig. 1 erläutert, kann die Auflösung bei der Ermittlung der Position dadurch erhöht werden, daß mit Hilfe eines Oszillators 15 weitere Impulse erzeugt werden, deren Frequenz ein Vielfaches der Frequenz der Taktsignale beträgt. Bei dem in Fig. 3 dargestellten Ausführungsbeispiel erzeugt der Oszillator 15 Impulse mit 64-facher Tachofrequenz, die einem weiteren Zähler 31 vom Typ LS 669 zugeführt werden. Die Zählrichtung des weiteren Zählers 31 wird vom Signal DR-Vorgabe gesteuert. Damit wird der Zählerstand auf 16 Stellen (Q1' bis Q4', Q1 bis Q12) erweitert und die Auflösung auf das 16-fache erhöht, da durch die Auswertung beider Flanken der Tachosignale A und B bereits eine vierfache Zählfrequenz erzielt wird. Die Winkelauflösung beträgt bei einer Teilung von 1024 pro Vollkreis demnach 360/4096 = 0,0879 Grad ohne den weiteren Zähler 31 und 360/(4096*16) = 0,0055 Grad mit dem weiteren Zähler 31.

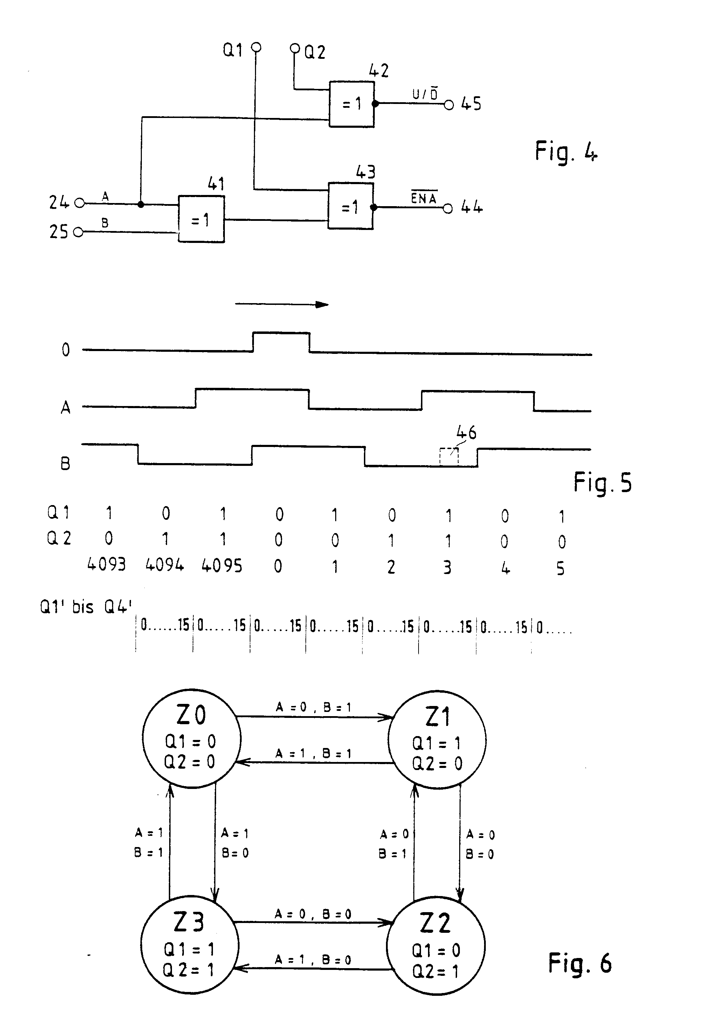

Fig 4 zeigt ein Ausführungsbeispiel für das Schaltnetz 26, bei welchem die Signale DR-Freigabe und DR-Vorgabe nicht berücksichtigt werden. Das Schaltnetz umfaßt eine Antivalenz-Schaltung 41 sowie zwei Äquivalenz-Schaltungen 42, 43. Die Tachosignale A, B werden über die Eingänge 24, 25 beiden Eingängen der Antivalenz-Schaltung 41 zugeführt. Der Ausgang der Antivalenzschaltung 41 ist mit einem Eingang der Äquivalenz-Schaltung 43 verbunden, an deren anderem Eingang das geringstwertige Bit (LSB) Q1 anliegt. Am Ausgang 44 kann das Freigabesignal E̅N̅A̅ für den Zähler entnommen werden. Zur Gewinnung eines Aufwärts/Abwärtssignals U/D̅ werden das Tachosignal A sowie die zweitgeringstwertige Stelle Q2 des Zählerstandes der Äquivalenz-Schaltung 42 zugeführt, an deren Ausgang 45 das Signal U/D̅ entnommen werden kann.

Die Funktion des Schaltnetzes nach Fig. 4 in Verbindung mit dem Zähler nach Fig. 2 wird im folgenden anhand von Fig. 5 näher erläutert. Fig. 5 zeigt Zeitdiagramme der Signale O, A und B für eine vorgegebene Drehrichtung, beispielsweise für Rechtslauf. Außerdem sind in Fig. 5 Werte von Q1 und Q2 des Zählers 21 und der gesamte Zählerstand Q1 bis Q12 angegeben. Schließlich ist der Zählerstand Q1' bis Q4' (Fig. 3) angedeutet.

Das Signal 0 tritt einmal während jeder Umdrehung auf, wahrend die Tachosignale A und B entsprechend der Teilung des Inkrementalgebers häufiger auftreten - beispielsweise 1024 mal pro Umdrehung. Die Tachosignale A und B sind um 90° gegeneinander phasenverschoben. Durch den Impuls 0 wird der Zähler rückgesetzt, so daß der Zählerstand 0 wird und damit auch die beiden niederwertigen Stellen Q1 und Q2 den Wert 0 annehmen. Nach der ersten darauffolgenden Flanke des Tachosignals A werden A und B verschieden groß, so daß am Ausgang der Antivalenz-Schaltung 41 der Wert 1 liegt. Durch Verknüpfung mit Q1 = 0 in der Äquivalenz-Schaltung 43 wird der Ausgang 44 ebenfalls zu 0, was eine Freigabe des Zählers bewirkt. Da zu diesem Zeitpunkt Q2 = 0 ist und A = 0 wird, wird U/D̅ = 1, was ein Inkrementieren des Zählers (Aufwärtszählen) bewirkt.

Durch die Inkrementierung des Zählers wird Q1 = 1, was wiederum bewirkt, daß bei der folgenden Flanke des Tachosignals B die Gleichheit der Tachosignale A und B zu E̅N̅A̅ = 0 führt, so daß eine weitere Inkrementierung des Zählers erfolgt.

Zu Beginn der darauffolgenden Viertelperiode der Tachosignale springt das Signal A auf 1, da jedoch Q2 ebenfalls = 1 ist, wird U/D̅ = 1. Da ferner A und B verschieden, Q1 jedoch = 0 ist, ergibt sich E̅N̅A̅ = 0, so daß der Zähler abermals inkrementiert wird.

Zur weiteren Erläuterung der Funktion des Schaltnetzes gemäß Fig. 4 in Verbindung mit der Zählerschaltung, insbesondere mit dem Zähler 21 (Fig. 2) wird im folgenden auf den Automatengraphen gemäß Fig. 6 Bezug genommen. Danach kann das Schaltnetz 26 einschließlich der beiden niederwertigen Stellen des Zählers 21 die Zustände Z0, Z1, Z2 und Z3 einnehmen. Die bei diesen Zuständen an den Ausgängen Q1 und Q2 anstehenden Werte sind in den die Zustände darstellenden Kreisen angegeben. Ein Übergang von einem Zustand in einen anderen kann nur im Sinne eines Aufwärts- bzw. Abwärtszählen erfolgen, was in Fig. 6 durch Pfeile zwischen den Kreisen angedeutet ist. Dabei bedeuten die Zahlen an den Pfeilen die für den jeweiligen Übergang erforderlichen Werte der Tachosignale A und B. So wird beispielsweise ein Übergang vom Zustand Z0 zum Zustand Z1 durch A = 0 und B = 1 verursacht. Wird danach B = 0, so geht das Schaltnetz in den Zustand 2 über.

Am Beispiel eines Störimpulses 46 (Fig. 5) wird die Filterwirkung des Schaltnetzes erläutert. Vor dem Störimpuls befindet sich das Schaltnetz im Zustand Z3. Dadurch, daß während des Störimpulses 46 das Tachosignal B den Wert 1 annimmt, erfolgt ein Weiterschalten in den Zustand Z0, da auch das Tachosignal A = 1 ist. Am Ende des Störimpulses wird jedoch wieder B = 0, so daß das Schaltnetz in den Zustand Z3 zurückgesetzt wird. Der Zähler wird also durch den Störimpuls 46 inkrementiert, nach dem Störimpuls jedoch wieder dekrementiert, so daß keine Verfälschung des Zählergebnisses erfolgt.

Das in Fig. 4 dargestellte Schaltnetz bewirkt also, daß in einem beliebigen Zustand nur die jeweils benachbarten Zustände zugelassen werden. Auf den Zählerstand 0 kann also nur einer der Zählerstände 1 oder 4095 folgen. Eine weitere Erhöhung der Betriebssicherheit wird durch die Vorgabe der Drehrichtung über den Rechner 3 (Fig. 1) gewonnen. Dabei wird eine durch die Tachosignale A und B angezeigte Änderung der Drehrichtung als Fehler erkannt, wenn dieses im Widerspruch zu dem vom Rechner zugeführten Signal DR-Vorgabe steht. Diese zusätzliche Prüfung kann allerdings bei Stillstand oder kleinen Drehzahlen zu Fehlern führen und wird daher abgeschaltet, wenn aufgrund geringer Drehzahlen ein Drehrichtungswechsel möglich ist. Es wird daher vom Rechner ein weiteres Signal DR-Freigabe zugeführt, das oberhalb einer vorgegebenen Drehzahl den Wert 1 annimmt.

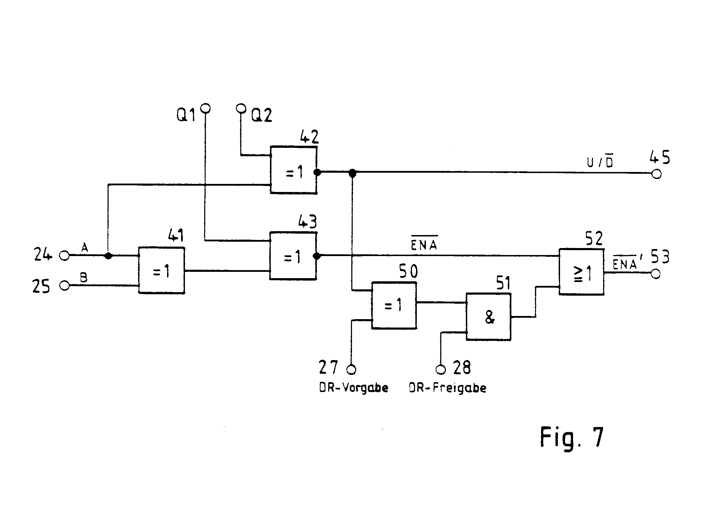

Das Schaltnetz gemäß Fig. 7 enthält zusätzlich zu den bereits im Zusammenhang mit Fig. 4 erläuterten Teilen eine Antivalenz-Schaltung 50, eine Und-Schaltung 51 und eine Oder-Schaltung 52. Das Ausgangssignal E̅N̅A̅ der Äquivalenz-Schaltung 43, das bei dem Schaltnetz nach Fig. 4 den Zähler sperrt (E̅N̅A̅ = 1) oder freigibt (E̅N̅A̅ = 0), wird bei dem Schaltnetz nach Fig. 7 nochmals durch eine Oder-Schaltung 52 gefiltert, deren Ausgangssignal E̅N̅A̅' über den Ausgang 53 dem Zähler zugeführt wird. Liegt am unteren Eingang der Oder-Schaltung 52 der Wert 0, so wird E̅N̅A̅' = E̅N̅A̅, so daß das Schaltnetz nach Fig. 6 wie das Schaltnetz nach Fig. 4 arbeitet. Bei einer 1 am unteren Eingang wird jedoch der Ausgang 53 unabhängig vom Wert von E̅N̅A̅ auf 1 gesetzt, was ein Sperren des Zählers bewirkt.

Dieses Sperren des Zählers kann jedoch nur erfolgen, wenn beiden Eingängen der Und-Schaltung 51 der Wert 1 zugeführt wird. Dieses ist der Fall, wenn sowohl das Signal DR-Freigabe den Wert 1 aufweist, als auch die beiden unabhängig voneinander gewonnenen die Drehrichtung kennzeichnenden Signale U/D̅ und DR-Vorgabe verschieden voneinander sind.

## Patentansprüche

1. Anordnung zur Erfassung der Position eines rotierenden Maschinenteils,
- bei der ein digital-inkremental arbeitender Positionsgeber (1) vorgesehen ist, der mit dem rotierenden Maschinenteil gekoppelt ist und der pro Umdrehung eine definierte Anzahl von Zählimpulsen (O, A, B) abgibt,
- bei der weiterhin eine Zählerschaltung (12, 21, 22, 23) mit dem Positionsgeber verbunden ist, wobei der Ausgang der Zählerschaltung (12, 21, 22, 23) mit einem Istwert-Eingang eines Vergleichers (13) in Verbindung steht, dessen Sollwert-Eingang über ein Register (14) und dessen Ausgang direkt mit einem Rechner (3) verbunden ist,
**dadurch gekennzeichnet,**
- daß zwischen dem Positionsgeber (1) und dem Eingang der Zählerschaltung (12, 21, 22, 23) ein Schaltnetz (26) vorgesehen ist,
- dem über zwei erste Eingänge zwei um 90° zueinander phasenverschobene Zählimpulssignale (A, B) des Positionsgebers (1) zuführbar sind,
- dem über zwei weitere Eingänge ein digitales Signal (DR-Vorgabe) über die momentan vorhandene Drehrichtung des Maschinenteils und ein digitales Signal (DR-Freigabe) für das Über- oder Unterschreiten eines Schwellwertes für die Geschwindigkeit des Maschinenteils aus dem Rechner (3) zuführbar sind,
- bei dem zwei weitere Eingänge mit dem Ausgang (Q1) für die niederwertigste Stelle und dem Ausgang (Q2) für die zweitniederwertigste Stelle der Zählerschaltung (12, 21, 22, 23) verbunden sind,
- dessen Ausgänge mit Zählsignaleingängen (U/D̅) und Zählerfreigabesignaleingängen (E̅N̅P̅) der Zählerschaltung (12, 21, 22, 23) in Verbindung stehen
- und das die um 90° phasenverschobenen Zählimpulssignale (A, B) so verknüpft, daß die Zählimpulse (O, A, B) nur gezählt werden, wenn eine zulässige Kombination der Zählimpulse (O, A, B) vorliegt.

2. Anordnung nach Anspruch 1,
**dadurch gekennzeichnet,**
- daß das Schaltnetz (26) aus einer Antivalenzschaltung (41) und zwei Äquivalenzschaltungen (42, 43) mit je zwei Eingängen besteht,
- wobei der erste Ausgang des Positionsgebers (1) mit einem ersten Eingang der Antivalenzschaltung (41) und einem ersten Eingang der ersten Äquivalenzschaltung (42) verbunden ist,
- wobei der zweite Ausgang des Positionsgebers (1) mit dem zweiten Eingang der Antivalenzschaltung (41) verbunden ist,
- wobei der Ausgang der Antivalenzschaltung (41) mit dem ersten Eingang der zweiten Äquivalenzschaltung (43) verbunden ist,
- wobei der Datenausgang (Q1) für die niederwertigste Stelle der synchronen Zähler (21, 22, 23) mit dem zweiten Eingang der zweiten Äquivalenzschaltung (43) verbunden ist und der Datenausgang (Q2) für die zweitniederwertigste Stelle mit dem zweiten Eingang der ersten Äquivalenzschaltung (42) verbunden ist,
- wobei der Ausgang der ersten Äquivalenzschaltung (42) mit den Aufwärts/Abwärtssignaleingängen U/D der synchronen Zähler (21, 22, 23) verbunden ist, und das Signal vom Ausgang der zweiten Äquivalenzschaltung 43 den Zählerfreigabesignaleingängen (ENP) der synchronen Zähler (21, 22, 23) zuführbar ist.

3. Schaltungsanordnung nach Anspruch 2,
**dadurch gekennzeichnet,**
daß im Schaltnetz (26) zusätzlich eine Antivalenzschaltung (50), eine UND-Schaltung (51) und eine ODER-Schaltung (52) mit je zwei Eingängen vorgesehen sind,
- wobei der erste Eingang der zusätzlichen Antivalenzschaltung (50) mit dem Ausgang der ersten Äquivalenzschaltung (42) verbunden ist,
- wobei der zweite Eingang der zusätzlichen Antivalenzschaltung (50) mit besagtem Datenausgang des Rechners (3) verbunden ist, an dem das Signal für die Bewegungsrichtung anliegt,
- wobei der Ausgang der zusätzlichen Antivalenzschaltung (50) mit dem ersten Eingang der UND-Schaltung (51) verbunden ist, dessen zweiter Eingang mit einem weiteren Datenausgang des Rechners 3 gekoppelt ist, an dem ein Signal für das Überschreiten eines Grenzwertes für die Geschwindigkeit des Maschinenteils anliegt, und dessen Ausgang mit einem ersten Eingang der ODER-Schaltung (52) verbunden ist,
- wobei der zweite Eingang der ODER-Schaltung (52) mit dem Ausgang der zweiten Äquivalenzschaltung (53) verbunden ist, und Ausgang der ODER-Schaltung (52) mit den Zählerfreigabesignaleingängen (ENP) der synchronen Zähler (21, 22, 23) in Verbindung steht.

4. Schaltungsanordnung nach Anspruch 1 bis Anspruch 3,
**dadurch gekennzeichnet,**
daß für Testzwecke der Rechner (3) drei Testsignalausgänge aufweist, die mittels eines Umschalters (2) an Stelle der drei Ausgänge des Positionsgebers (1) auf die Schaltelemente (3, 4, 7, 18, 12) zur Verarbeitung der Signale des Positionsgebers (1) schaltbar sind.

5. Schaltungsanordnung nach Anspruch 1 bis Anspruch 4,
**dadurch gekennzeichnet,**
daß zur Erhöhung der Auflösung bei der Positionserfassung des Maschinenteils ein in seiner Frequenz vom Rechner (3) steuerbarer Zusatzimpulsgenerator (15) vorgesehen ist, an dessen Taktimpulsausgang ein Takt mit einer Frequenz erzeugbar ist, die ein Vielfaches der Frequenz der Positionssignale (A, B) beträgt, wobei der Steuereingang des Zusatzimpulsgenerators (15) mit dem Datenbus (10) des Rechners (3) gekoppelt ist und der Taktimpulsausgang mit einem Taktimpulseingang(C, L, K) eines weiteren Zählers (31) verbunden ist, dessen Dateneingänge (A, B, C, D) wie die der zusammengeschalteten synchronen Zähler (21, 22, 23) auf Massepotential (GND) liegen, dessen Datenausgänge (QA, QB, QC, QD) ebenfalls mit dem Ist-Dateneingang des Vergleichers (13) in Verbindung stehen, dessen Ladeeingang (LOAD) mit den Zählerfreigabesignaleingängen (ENP) der synchronen Zähler (21, 22, 23) verbunden ist, und dessen Aufwärts/Abwärts-Zählersignaleingang (U/D) mit einem Datenausgang des Rechners (3) in Verbindung steht, an dem ein digitales Signal für die Bewegungsrichtung des Maschinenteils anliegt.

6. Schaltungsanordnung nach Anspruch 1 bis Anspruch 5,
**dadurch gekennzeichnet,**
- daß zur Erfassung der Geschwindigkeit des bewegten Maschinenteils einer der Ausgänge des Positionsgebers (1), an dem ein Positionsignal (A) anliegt, mit dem Eingang eines in seinem Teilerverhältnis vom Rechner (3) steuerbaren Frequenzteilers (17) verbunden ist,
- wobei der Steuereingang des Frequenzteilers (17) mit dem Datenbus (10) des Rechners (3) gekoppelt ist,
- wobei der Ausgang des Frequenzteilers (17) mit Start/Stop-Eingängen zweier Zähler (8, 9) verbunden ist, deren Takteingänge mit dem Ausgang eines in seiner Frequenz vom Rechner (3) steuerbaren Oszillators (11) in Verbindung stehen, dessen Steuereingang mit dem Datenbus (10) des Rechners (3) gekoppelt ist, und deren Datenausgänge ebenfalls mit dem Datenbus (10) des Rechners (3) gekoppelt sind.

7. Schaltungsanordnung nach Anspruch 6,
**dadurch gekennzeichnet,**
daß zwischen dem Ausgang des Positionsgebers (1) und dem Frequenzteiler (17) ein zweipoliger elektronischer Umschalter (7) geschaltet ist.

## Claims

1. System for determining the position of a movable machine part,
- in which there is provided a digitally and incrementally functioning rotary encoder (1) being coupled with said movable machine part and generating a defined number of pulses (O, A, B) per rotation, and
- in which a counting circuit (12, 21, 22, 23) is connected to said rotary encoder (1), and the output of said counting circuit (12, 21, 22, 23) is connected to an actual-value input of a comparator (13), and a reference-value input of said comparator (13) is connected to a computer (3) via a register (14), and an output of said comparator (13) is connected to said computer (3) directly,
**characterized**
- in that there is provided a combinatorial circuit (26) between said rotary encoder (1) and the input of said counting circuit (12, 21, 22, 23),
- that to said combinatorial circuit (26), via two first inputs, there can be fed two count puls signals (A, B) from said rotary encoder (1), said two count puls signals being phase-shifted 90° with respect to one another,
- that to said combinatorial circuit (26), via two further inputs, there can be fed from said computer (3) a digital signal (DR-enable) indicating the present direction of movement of the machine part, and a digital signal (DR-enable) for the speed of said machine part being above or below a threshhold value,
- that in said combinatorial circuit (26) there are connected two further inputs to an output (Q1) for the least significant bit and to an output (Q2) for the second least significant bit of said counting circuit (12, 21, 22, 23),
- that the outputs of said combinatorial circuit (26) are connected to counter signal inputs (U/D) and counter-enabling signal inputs (ENP) of said counting circuit (12, 21, 22, 23), and
- that said combinatorial circuit (26) combines said 90° phase-shiftet count puls signals (A, B) in such a way that said count pulses (O, A, B) are counted only when there is an allowable combination of the count pulses (O, A, B).

2. Circuit system according to Claim 1,
**characterized**
- in that the combinatorial circuit (26) consists of an antivalence circuit (41) and two equivalence circuits (42, 43) having two inputs each,
- that the first output of the rotary encoder (1) is connected to the first input of said antivalence circuit (41) and the first input of said first equivalence circuit (42),
- that the second output of said rotary encoder (1) is connected to the second input of said antivalence circuit (41),
- that the output of said antivalence circuit (41) is connected to the first input of said second equivalence circuit (43),
- that the data output (Q1) for the least significant bit of the synchronous counters (21, 22, 23) is connected to the second input of said second equivalence circuit (43) and the data output (Q2) for the second least significant bit of said synchronous counters (21, 22, 23) is connected to the second input of said first equivalence circuit (42),
- that the output of said first equivalence circuit (42) is connected to the up/down signal inputs U/D of said synchronous counters (21, 22, 23), and that the signal from the output of said second equivalence circuit 43 can be fed to the counter-enable signal inputs (ENP) of said synchronous counters (21, 22, 23).

3. Circuit system according to Claim 2,
**characterized**
in that in the combinatorial circuit (26) there are additionally provided an antivalence circuit (50), an UND-circuit (51) and an ODER-circuit (52) having two inputs each,
- that the first input of said additional antivalence circuit (50) is connected to the output of the first equivalence circuit (42),
- that the second input of the additional antivalence circuit (50) is connected to the data output of the computer (3) in which the signal for the direction of movement is present,
- that the output of the additional antivalence circuit (50) is connected to the first input of the UND-circuit (51), and the second input of said UND-circuit (51) is coupled with a further data output of the said computer (3) in which a signal for exceeding a limit value for the speed of the machine part is present, and the output of said UND-circuit (51) is connected to a first input of the ODER-circuit (52),
- that a second input of said ODER-circuit (52) is connected to the output of the second equivalence circuit (53), and the output of said ODER-circuit (52) is connected to counter-enable signal inputs (ENP) of the synchronous counters (21, 22, 23).

4. Circuit system according to Claims 1 to 3,
**characterized**
in that, for test purposes, the computer (3) includes three test signal outputs which, in place of the three outputs of the rotary encoder (1), can be switched by means of a changeover switch (2) to the circuit elements (3, 4, 7, 18, 12) for processing the signals of said rotary encoder (1).

5. Circuit system according to Claims 1 to 4,
**characterized**
in that for the sake of extending the resolution in determining the position of a machine part there is provided an additional pulse generator (15) being controllable as to its frequency by the computer (3), and at the timing puls output of said additional pulse generator (15) there can be generated a timing puls of a frequency which amounts to a multiplicity of the frequency of the count puls signals (A, B), whereby the control input of said additional pulse generator (15) is coupled with the data bus (10) of said computer (3) and the timing pulse output of said additional pulse generator (15) is connected to a timing pulse input (C, L, K) of an additional counter (31), and the data inputs (A, B, C, D) of said additional counter (31) as well as the data inputs of the combined synchronous counters (21, 22, 23) are connected to ground (GND), and the data outputs (QA, QB, QC, QD) of said additional counter (31) are also connected to the actual-value data input of the comparator (13), and the load input (LOAD) of said additional counter (31) is connected to the counter-enable signal inputs (ENP) of the synchronous counters (21, 22, 23), and the up/down counter signal input (U/D) of said additional counter (31) is connected to a data output of said computer (3) in which a digital signal for the direction of movement of the machine part is present.

6. Circuit system according to Claims 1 to 5,
**characterized**
- in that for the determination of the speed of the moved machine part one of the outputs of the rotary encoder (1), in which a positioning signal (A) is present, is connected to the output of a frequency divider (17) being controllable by the computer (3) with respect to its internal ratio,
- that the control input of said frequency divider (17) is coupled with the data bus (10) of said computer (3),
- that the output of said frequency divider (17) is connected to start/stop inputs of two counters (8, 9), and the timing pulse inputs of said two counters (8, 9) are connected to the output of an oscillator (11) being controllable by said computer (3) with respect to its frequency, and the control input of said oscillator (11) is coupled with the data bus (10) of said computer-(3), and the data outputs of said oscillator (11) are also coupled with the data bus (10) of said computer (3).

7. Circuit system according to Claim 6,
**characterized**
in that between the output of the rotary encoder (1) and the frequency divider (17) there is inserted a two-phase electronic changeover switch (7).

## Revendications

1. Système pour détecter la position d'une partie tournante d'une machine,
- dans lequel il est prévu un capteur de position (1) opérant de façon numérique-incrémentale, qui est accouplé à la partie tournante de la machine et qui produit, par tour, un nombre défini d'impulsions de comptage (O, A, B),
- dans lequel en outre un circuit de comptage (12, 21, 22, 23) est relié au capteur de position, la sortie du circuit de comptage (12, 21, 22, 23) étant reliée à une entrée de valeur réelle d'un comparateur (13), dont l'entrée de valeur de consigne est reliée, par l'intermédiaire de registre (14) ou de sa sortie, directement avec un ordinateur (3),
- caractérisé en ce que :
- il est prévu entre le capteur de position (1) et l'entrée du circuit de comptage (12, 21, 22, 23) un réseau de commutation (26),
- auquel peuvent être appliqués, par l'intermédiaire de deux premières entrées, deux signaux impulsionnels de comptage (A, B) du capteur de position (1) qui sont mutuellement déphasés de 90°,
- auquel peuvent être appliqués, par l'intermédiaire de deux autres entrées, un signal numérique (Affectation -DR) en fonction du sens de rotation instantanément existant pour la partie de machine et un signal numérique (Libération-DR) en fonction du dépassement par excès ou par défaut d'une valeur de seuil concernant la vitesse de la partie de machine, ces signaux provenant de l'ordinateur (3),
- dans lequel deux autres entrées sont reliées à la sortie (Q₁) du dernier bit de poids faible, et à la sortie minimale (Q₂) de l'avant-dernier bit de poids faible, du circuit de comptage (12, 21, 22, 23),
- dont des sorties sont reliées à des entrées de signaux de comptage (U/D̅) et des entrées de signaux de libération de compteur (E̅N̅P̅) du circuit de comptage (12, 21, 22, 23),
- et les signaux impulsionnels de comptage déphasés de 90° (AB) sont combinés de telle sorte que les impulsions de comptage (O, A, B) ne soient comptées que lorsqu'il existe une combinaison admissible des impulsions de comptage (O, A, B).

2. Système selon la revendication 1, caractérisé en ce que :
- le réseau de commutation (26) se compose d'un circuit d'antivalence (41) et de deux circuits d'équivalence (42, 43) comportant chacun deux entrées,
- la première sortie du capteur de position (1) est reliée à une première entrée du circuit d'antivalence (41) et à une première entrée du premier circuit d'équivalence (42),
- la seconde sortie du capteur de position (1) est reliée à la seconde entrée du circuit d'antivalence (41),
- la sortie du circuit d'antivalence (41) est reliée à la première entrée du second circuit d'éuivalence (43),
- la sortie de données (Q1) du bit de poids le plus faible des compteurs synchrones (21, 22, 23) est reliée à la seconde entrée du second circuit d'équivalence (43) et la sortie de données (Q2) pour l'avant-dernier bit de poids faible est reliée à la seconde entrée du premier circuit d'équivalence (42),
- la sortie du premier circuit d'équivalence (42) est reliée aux entrées de signaux progressifs/régressifs U/D̅ des compteurs synchrones (21, 22, 23), et le signal apparaissant à la sortie du second circuit d'équivalence (43) est relié aux entrées de signaux "Libération de compteur" (ENP) des compteurs synchrones (21, 22, 23).

3. Agencement de circuits selon la revendication 2, caractérisé en ce qu'il est prévu dans le réseau de commutation (26) additionnellement un circuit d'antivalence (50), une porte-ET (51) et une porte-OU (52) comportant chacun deux entrées,
- la première entrée du circuit d'antivalence additionnel (50) est reliée à la sortie du premier circuit d'équivalence (42),
- la seconde entrée du circuit d'antivalence additionnel (50) est reliée à la sortie de données précitée de l'ordinateur (3) , qui reçoit le signal représentant le sens de mouvement,
- la sortie du circuit d'antivalence additionnel (50) est reliée à la première entrée de la porte-ET-51, dont la seconde entrée est reliée à une autre sortie de données de l'ordinateur (3), qui reçoit un signal représentant le dépassement d'une valeur limite de la vitesse de la partie de machine, et dont la sortie est reliée à une première entrée de la porte-OU (52),
- la seconde entrée de la porte-OU (52) est reliée à la sortie du second circuit d'équivalence (53) et la sortie de la porte-OU (52) est reliée aux entrées de signaux de "Libération de compteur " (ENP) des compteurs synchrones (21, 22, 23).

4. Agencement de circuits selon une des revendications 1 à 3, caractérisé en ce que, pour des applications de test, l'ordinateur (3) comporte trois sorties de signaux de test, qui peuvent être reliées, au moyen d'un commutateur (2), à la place des trois sorties du capteur de position (1) avec les éléments de commutation (3, 4, 7, 18, 12) pour un traitement des signaux du capteur de position (1).

5. Agencement de circuits selon une des revendications 1 à 4, caractérisé en ce que, pour augmenter la résolution lors du captage de position de la partie de machine, il est prévu un générateur (15) d'impulsions additionnelles dont la fréquence peut être commandée par l'ordinateur (3) et qui peut produire à sa sortie d'impulsions d'horloge une impulsion d'horloge ayant une fréquence qui s'élève à un multiple de la fréquence des signaux de position (A, B), l'entrée de commande du générateur (15) d'impulsions additionnelles étant reliée au bus de données (10) de l'ordinateur (3) et la sortie d'impulsions d'horloge étant reliée à une entrée d'impulsions d'horloge (CLK) d'un autre compteur (31), dont les entrées de données (A, B, C, D) sont reliées, comme les compteurs synchrones associés (21, 22, 23), au potentiel de masse (GND), dont les sorties de données (QA, QB, QC, QD) sont reliées également à l'entrée de données réelles du comparateur (13), dont l'entrée de charge (CHARGE) est reliée aux entrées de signaux de "Libération de compteur" (ENP) des compteurs synchrones (21, 22, 23), et dont l'entrée de signaux de comptage progressif/ égressif (U/D) est reliée ) une sortie de données de l'ordinateur (3), qui reçoit un signal numérique représentant le sens de mouvement de la partie de machine.

6. Agencement de circuits selon une des revendications 1 à 5, caractérisé en ce que :
- pour capter la vitesse de la partie mobile de machine, une des sorties du capteur de position (1), à laquelle est appliqué un signal de position (A), est reliée à l'entrée d'un diviseur de fréquence (17), dont le rapport de division peut être commandé par l'ordinateur (3),
- l'entrée de commande du diviseur de fréquence (17) est reliée au bus de données (10) de l'ordinateur (3),
- la sortie du diviseur de fréquence (17) est reliée aux entrées marche/arrêt de deux compteurs (8, 9), dont les entrées d'horloge sont reliées à la sortie d'un oscillateur (11), dont la fréquence peut être commandée par l'ordinateur (3) et dont l'entrée de commande est reliée au bus de données (10) de l'ordinateur (3) tandis que ses sorties de données sont également reliées au bus de données (10) de l'ordinateur (3).

7. Agencement de circuits selon la revendication 6, caractérisé en ce qu'un commutateur électronique bipolaire (7) est connecté entre la sortie du capteur de position (1) et le diviseur de fréquence (17).
